# EUROPEAN PATENT APPLICATION

(11) **EP 2 803 453 A2**
(43) Date of publication of application: **19.11.2014**
(21) Application number: 14157574.6
(22) Date of filing: 04.03.2014
(51) Int. Cl.: B25J 9/16

(54) **Robot system and method for producing workpiece**

(30) Priority: 14.03.2013 JP 2013052034
(71) Applicant: Kabushiki Kaisha Yaskawa Denki, Kitakyushu-shi, Fukuoka 806-0004 (JP)
(72) Inventor: Nakamura, Tamio, Kitakyushu-shi, Fukuoka 806-0004 (JP); Kouno, Dai, Kitakyushu-shi, Fukuoka 806-0004 (JP); Izumi, Tetsuro, Kitakyushu-shi, Fukuoka 806-0004 (JP); Nagai, Ryoichi, Kitakyushu-shi, Fukuoka 806-0004 (JP)
(74) Representative: Viering, Jentschura & Partner Patent- und Rechtsanwälte

(57) **Abstract**

A robot system 1 includes a robot 10 and a control apparatus 30. The robot 10 includes a sensor 20, 21, 22, 23 to constantly detect the robot 10. The control apparatus 30 includes a control device 31 and a first storage device 32. The control device 31 controls the robot 10. The first storage device 32 stores a plurality of operation modes of the robot 10 and standard data associated with at least one operation mode among the operation modes. When the robot 10 has performed an operation corresponding to the operation mode associated with the standard data, the control device 31 compares the standard data with a result of detection by the sensor 20, 21, 22, 23, and controls a display device 40 to display a result of comparison.

## Description

### BACKGROUND OF THE INVENTION

### FIELD OF THE INVENTION

The present invention relates to a robot system and a method for producing a workpiece.

### DISCUSSION OF THE BACKGROUND

Japanese Unexamined Patent Application Publication No. 2010-12535 discloses a robot system including a plurality of robot cells and an interlock server having a shared memory map accessible from each robot cell.

The contents of Japanese Unexamined Patent Application Publication No. 2010-12535 are incorporated herein by reference in their entirety.

In recent years, robots have been replacing humans for precision work. There is a need to improve the quality of end products obtained through the work performed by the robots. To improve the quality of end products, highly precise motion is required of the robots, and it is also necessary to check the precision of the work performed by the robots.

An object of the present invention is to provide a robot system and a method for producing a workpiece that improve the quality of an end product obtained through work performed by a robot.

### SUMMARY

According to one aspect of the present disclosure, a robot system 1 includes a robot 10 and at least one control apparatus 30. The robot 10 includes a sensor 20, 21, 22, 23 configured to constantly detect the robot 10. The at least one control apparatus 30 includes a control device 31 and a first storage device 32. The control device 31 is configured to control the robot 10. The first storage device 32 is configured to store a plurality of operation modes of the robot 10 and standard data associated with at least one operation mode among the plurality of operation modes. When the robot 10 has performed an operation corresponding to the at least one operation mode associated with the standard data, the control device 31 is configured to compare the standard data with a result of detection by the sensor 20, 21, 22, 23, and is configured to control a display device 40 to display a result of comparison.

According to another aspect of the present disclosure, a method is for producing a workpiece in a robot system 1 including a robot 10 and a control apparatus 30 configured to control the robot 10. The method includes constantly detecting the robot 10 using a sensor 20, 21, 22, 23 disposed in the robot 10. When the robot 10 performs an operation corresponding to at least one operation mode among a plurality of operation modes of the robot 10, standard data associated with the at least one operation mode is acquired from a storage device 32 of the control apparatus 30 using a control device 31 of the control apparatus 30. When the robot 10 has performed the operation corresponding to the at least one operation mode associated with the standard data acquired from the storage device 32, the standard data is compared with a result of detection by the sensor 20, 21, 22, 23 using the control device 31, and a display device 40 is controlled to display a result of comparison using the control device 31.

The present disclosure improves the quality of an end product obtained through work performed by a robot.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a diagram showing a robot system according to an embodiment;
FIG. 2 is a plan view of a robot;
FIG. 3 is a diagram showing a functional configuration of the robot system;
FIG. 4 is a diagram showing a functional configuration of a robot controller;
FIGs. 5A and 5B describe how to detect contact between an object and an arm; and
FIG. 6 is a flowchart of an operation of the robot system.

### DESCRIPTION OF THE EMBODIMENTS

The embodiments will now be described with reference to the accompanying drawings, wherein like reference numerals designate corresponding or identical elements throughout the various drawings.

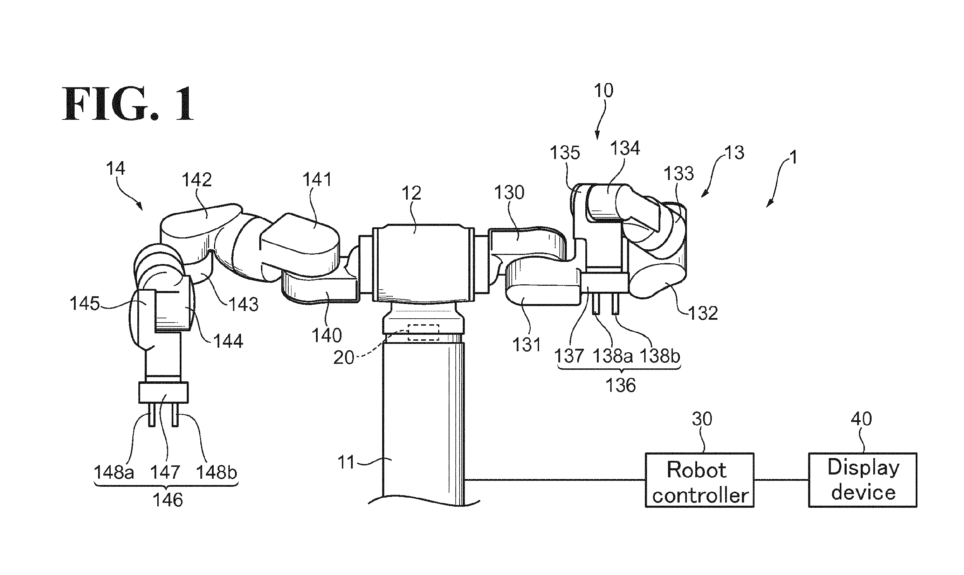

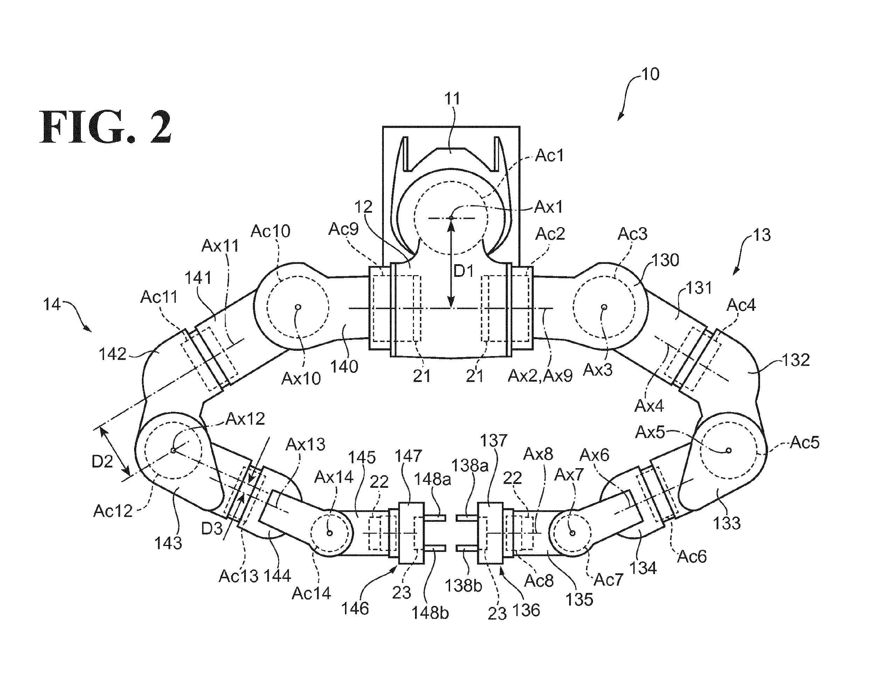

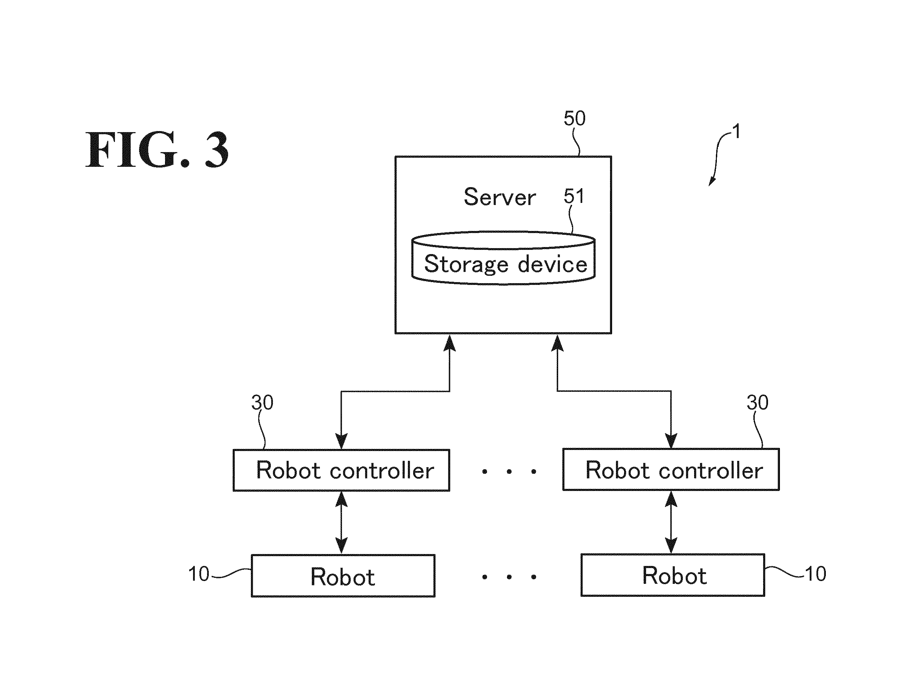

FIG. 1 is a diagram showing a robot system according to an embodiment. FIG. 2 is a plan view of a robot. FIG. 3 is a diagram showing a functional configuration of the robot. An exemplary application of a robot system 1 shown in FIGs. 1 to 3 is a system for processing liquid biological materials. As shown in FIGs. 1 to 3, the robot system 1 includes a robot 10, a robot controller (control apparatus) 30, a display device 40, and a server (external apparatus) 50. The robot system 1 includes a plurality of the same robots 10, and the robot controller 30 is disposed in each robot 10.

### [Configuration of the robot]

First, the robot 10 will be described. The robot 10 is a dual arm robot including a base 11, a body 12, and two arms 13 and 14. The robots 10 have the same configuration.

The base 11 is secured to an installment surface (such as floor) with an anchor bolt or similar means not shown. The body 12 includes a first joint including an actuator Ac1. The actuator Ac1 provides rotational drive about a rotation axis Ax1. The body 12 is rotatably disposed on the base 11 via the first joint. The body 12 is driven by the actuator Ac1, which is disposed in the first joint into rotation, in a direction approximately parallel to the installment surface. The arms 13 and 14 are separate from the body 12. The arm 13 is supported on one side (right side in FIGs. 1 and 2) of the body 12, while the arm 14 is supported on the other side (left side in FIGs. 1 and 2) of the body 12.

The arm 13 is a manipulator disposed on one side of the body 12, and includes a shoulder 130, an upper arm A 131, an upper arm B 132, a lower arm 133, a wrist A 134, a wrist B 135, a robot hand 136, and second to eighth joints respectively incorporating actuators Ac2 to Ac8. The actuators Ac2 to Ac8 provide rotational drive to these elements of the arm 13.

The shoulder 130 is rotatably coupled to the body 12 via the second joint, and is driven by the actuator Ac2, which is disposed in the second joint, into rotation about a rotation axis Ax2, which is approximately parallel to the installment surface. The upper arm A 131 is rotatably coupled to the shoulder 130 via the third joint, and is driven by the actuator Ac3, which is disposed in the third joint, into rotation about a rotation axis Ax3, which is orthogonal to the rotation axis Ax2. The upper arm B 132 is rotatably coupled to the distal end of the upper arm A 131 via the fourth joint, and is driven by the actuator Ac4, which is disposed in the fourth joint, into rotation about a rotation axis Ax4, which is orthogonal to the rotation axis Ax3.

The lower arm 133 is rotatably coupled to the upper arm B 132 via the fifth joint, and is driven by the actuator Ac5, which is disposed in the fifth joint, into rotation about a rotation axis Ax5, which is orthogonal to the rotation axis Ax4. The wrist A 134 is rotatably coupled to the distal end of the lower arm 133 via the sixth joint, and is driven by the actuator Ac6, which is disposed in the sixth joint, into rotation about a rotation axis Ax6, which is orthogonal to the rotation axis Ax5. The wrist B 135 is rotatably coupled to the wrist A 134 via the seventh joint, and is driven by the actuator Ac7, which is disposed in the seventh joint, into rotation about a rotation axis Ax7, which is orthogonal to the rotation axis Ax6.

The robot hand 136 includes a gripper 137 and a pair of bits 138a and 138b. The gripper 137 is rotatably coupled to the distal end of the wrist B 135 via the eighth joint, and is driven by the actuator Ac8, which is disposed in the eighth joint, into rotation about a rotation axis Ax8, which is orthogonal to the rotation axis Ax7. The gripper 137 causes the pair of bits 138a and 138b to reciprocate. The pair of bits 138a and 138b are mounted on the distal end of the gripper 137 and face each other. The pair of bits 138a and 138b are driven by an actuator, not shown, to move toward and away from each other.

The arm 14 is a manipulator disposed on the other side of the body 12 and has a configuration similar to that of the arm 13. Specifically, the arm 14 includes a shoulder 140, an upper arm A 141, an upper arm B 142, a lower arm 133, a wrist A 144, a wrist B 145, a robot hand 146, and ninth to fifteenth joints respectively incorporating actuators Ac9 to Ac15. The actuators Ac9 to Ac15 provide rotational drive to these elements of the arm 14.

The shoulder 140 is rotatably coupled to the body 12 via the ninth joint, and is driven by the actuator Ac9, which is disposed in the ninth joint, into rotation about a rotation axis Ax9, which is approximately parallel to the installment surface. The upper arm A 141 is rotatably coupled to the shoulder 140 via the tenth joint, and is driven by the actuator Ac10, which is disposed in the tenth joint, into rotation about a rotation axis Ax10, which is orthogonal to the rotation axis Ax9. The upper arm B 142 is rotatably coupled to the distal end of the upper arm A 141 via the eleventh joint, and is driven by the actuator Ac11, which is disposed in the eleventh joint, into rotation about a rotation axis Ax11, which is orthogonal to the rotation axis Ax10.

The lower arm 143 is rotatably coupled to the upper arm B 142 via the twelfth joint, and is driven by the actuator Ac12, which is disposed in the twelfth joint, into rotation about a rotation axis Ax12, which is orthogonal to the rotation axis Ax11. The wrist A 144 is rotatably coupled to the distal end of the lower arm 143 via the thirteenth joint, and is driven by the actuator Ac13, which is disposed in the thirteenth joint, into rotation about a rotation axis Ax13, which is orthogonal to the rotation axis Ax12. The wrist B 145 is rotatably coupled to the wrist A 144 via the fourteenth joint, and is driven by the actuator Ac14, which is disposed in the fourteenth joint, into rotation about a rotation axis Ax14, which is orthogonal to the rotation axis Ax13.

The robot hand 146 includes a gripper 147 and a pair of bits 148a and 148b. The gripper 147 is rotatably coupled to the distal end of the wrist B 145 via the fifteenth joint, and is driven by the actuator Ac15, which is disposed in the fifteenth joint, into rotation about a rotation axis Ax15, which is orthogonal to the rotation axis Ax14. The gripper 147 causes the pair of bits 148a and 148b to reciprocate. The pair of bits 148a and 148b are mounted on the distal end of the gripper 147 and face one another. The pair of bits 148a and 148b are driven by an actuator, not shown, to move toward and away from each other.

The actuators Ac1 to Ac 15 each include a servomotor (not shown). Each of the actuators Ac1 to Ac15 incorporates an encoder (not shown) that outputs a rotational position of the corresponding actuator in the form of a signal to the robot controller 30.

In this embodiment, the arms 13 and 14 each have seven joints, that is, seven degrees of freedom (redundant degree of freedom). The degrees of freedom of the arms 13 and 14 not be limited to seven.

Metal material such as iron and aluminum is an exemplary structural material of the shoulders 130 and 140, the upper arms A 131 and 141, the upper arms B 132 and 142, the lower arms 136 and 146, the wrist As 134 and 144, the wrists B 135 and 145, and the robot hands 136 and 146 of the arms 13 and 14.

As shown in FIG. 2, the body 12 has its second through ninth joints protrude in the horizontally front direction relative to the base 11, with a result that the rotation axes Ax2 and Ax9 of the second and the ninth joints are offset from the rotation axis Ax1 of the first joint by a distance D1 in a direction parallel to the installment surface. This makes the space under the shoulders 130 and 140 serve as work space for the robot 10, and enlarges the reachable ranges of the arms 13 and 14 by rotating the rotation axis Ax1.

The shape of the upper arm B 142 is designed such that the positions of the rotation axis Ax11 of the eleventh joint and the rotation axis Ax12 of the twelfth joint are offset from each other by a distance D2 in plan view. The shape of the lower arm 143 is designed such that the positions of the rotation axis Ax13 of the thirteenth joint and the rotation axis Ax12 of the twelfth joint are offset from each other by a distance D3 in plan view. Thus, when the robot 10 takes such a posture that the rotation axes Ax11 and Ax13 are approximately parallel to each other, the offset length between the rotation axes Ax11 and Ax13 is (D2 + D3). Thus, when the twelfth joint, which corresponds to the human "elbow", is bent, a large clearance is secured between the lower arm 143, which corresponds to the human "lower arm", and the upper arm A 141 and the upper arm B 142, which correspond to the human "upper arm". Thus, the arm 14 has a larger movable degree of freedom even when the robot hand 146 moves closer to the body 12.

The arm 13 has a similar configuration, which is not clearly shown in FIG. 2. Specifically, the shape of the upper arm B 132 is designed such that the positions of the rotation axis Ax4 of the fourth joint and the rotation axis Ax5 of the fifth joint are offset from each other by the distance D2 in plan view. The shape of the lower arm 133 is designed such that the positions of the rotation axis Ax5 of the fifth joint and the rotation axis Ax6 of the sixth joint are offset from each other by the distance D3 in plan view. Thus, when the robot 10 takes such a posture that the rotation axes Ax4 and Ax5 are approximately parallel to each other, the offset length between the rotation axes Ax4 and Ax6 is (D2 + D3).

The robot 10 includes a first sensor 20, second sensors 21, third sensors 22, and fourth sensors 23. The first sensor 20 is disposed in the body 12. The second sensors 21 are respectively disposed in the base ends of the arms 13 and 14. The third sensors 22 are respectively disposed in distal ends of the wrists B 135 and 145. The fourth sensors 23 are respectively disposed in the robot hands 136 and 146. The first to the fourth sensors 20 to 23 detect the operations of the corresponding portions of the robot 10 in real time. It is also possible to provide other sensors in portions other than the portions described above.

Each of the first to fourth sensors 20 to 23 is a force sensor having a piezoelectric element. The piezoelectric element is made of a material having a larger specific frequency (or rigidity) than the specific frequency of the metal material constituting the structural material of the constituent portions of the robot 10. In this embodiment, the piezoelectric element of each sensor is a crystal. The crystal has a larger specific frequency than the specific frequency of the metal material as the structural material of the constituent portions of the robot 10. A sensor with a larger specific frequency is able to detect fluctuating force with higher frequency components. Thus, the sensors 20 to 23 are capable of detecting fine high frequency oscillation transmitted to the structural material of the constituent portions of the robot 10.

Each of the sensors 20 to 23 detects, as a voltage, the amount of distortion in a radial direction produced on the sensor fixing jig (not shown) by force (impact and oscillation) applied to the corresponding portion (detection result). The voltage detected by each of the sensors 20 to 23 is amplified by an amplifier not shown, and input into a high-pass filter. Then, the voltage is output to the robot controller 30 as an output value V.

### [Configuration of robot controller]

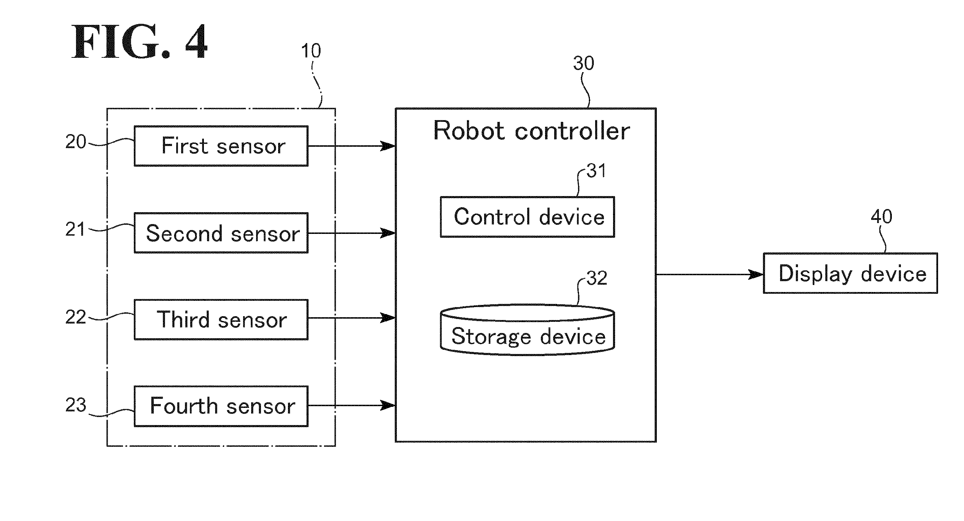

FIG. 4 is a diagram showing a functional configuration of the robot controller 30. As shown in FIG. 4, the robot controller 30 includes a control device 31 and a storage device 32. The robot controller 30 includes a central processing unit (CPU), a read only memory (ROM), a random access memory (RAM), and a hard disc. The robot controller 30 is coupled to the actuators Ac1 to Ac15 and the sensors 20 to 23 of the robot 10 as well as to the server 50 in a mutually communicative manner through communication cables.

The control device 31 controls an operation of the robot 10. Through an input device (not shown), the control device 31 receives operation information (operation start position and operation complete position) corresponding to a job of the robot 10. Based on the operation information, the control device 31 calculates a position command (operation command) for each of the actuators Ac1 to Ac15. Based on the calculated position command, the control device 31 generates a torque command for the servomotor of each of the actuators Ac1 to Ac15 so as to control the actuators Ac1 to Ac15.

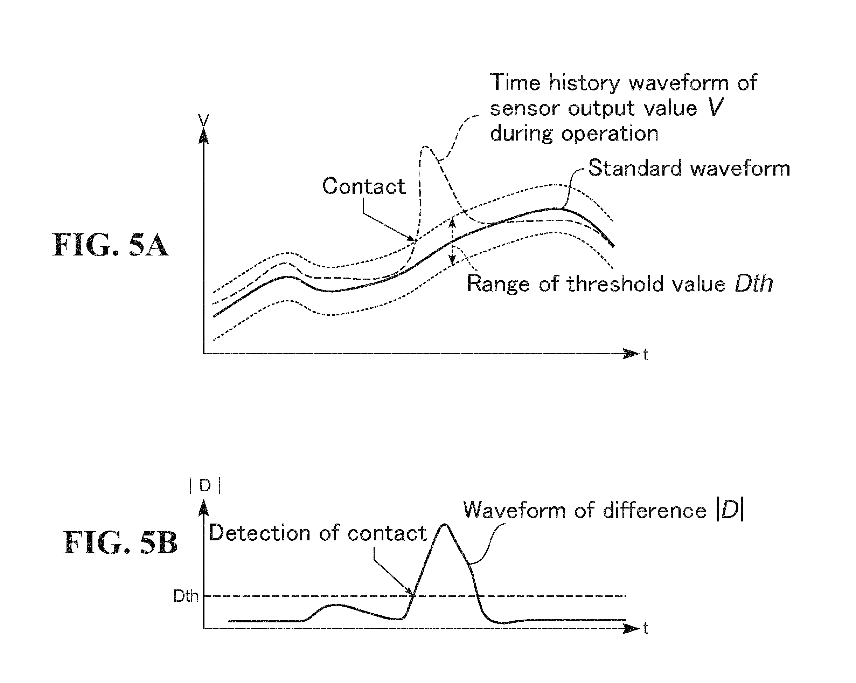

The control device 31 detects contact (collision) between an object and the arms 13 and 14 while the robot 10 is in motion. FIGs. 5A and 5B describe how to detect contact between an arm and an object. In FIG. 5A, the horizontal axis represents time and the vertical axis represents the output value V of a sensor. In FIG. 5B, the horizontal axis represents time and the vertical axis represents a difference |D|.

When the robot 10 performs a particular job, the control device 31 acquires a standard waveform associated with the particular job from the storage device 32. Examples of the particular job include, but are not limited to, a pipetting operation of injecting liquid into a test tube with a pipette, and an operation using laboratory instruments arranged around the robot 10. The control device 31 calculates the difference |D| between the standard waveform (standard data) and a time history waveform of the output value V output from each of the first to the fourth sensors 20 to 23. Then, the control device 31 compares the calculated difference |D| with a threshold value Dth set in advance to determine whether the arm 13 or 14 is in contact with an object. When every difference |D| corresponding to the first to the fourth sensors 20 to 23 is within the threshold value Dth, the control device 31 determines that the arm 13 or 14 is not in contact with the object. When any one difference |D| corresponding to any of the first to the fourth sensors 20 to 23 exceeds the threshold value Dth, the control device 31 determines that the arm 13 or 14 is in contact with the object.

The exemplary time history waveform of the sensor output value V shown in FIG. 5A represents a waveform obtained when the arm 13 or 14 comes into momentary contact with the object (that is, the external force is released immediately after the contact), such as when the arm 13 or 14 hits the object. The method employed in this embodiment ensures detection of such momentary contact.

The threshold value Dth is conveniently set based on input information input through the input device. As shown in FIG. 5A, as the range of the threshold value Dth becomes smaller, that is, as the threshold value Dth becomes closer to the standard waveform, the range of tolerance of the operating error of the robot 10 becomes smaller. This enables the robot 10 to perform the operation more highly precisely. The threshold value Dth may be conveniently set in accordance with a desired operation of the robot 10. Alternatively, the threshold value Dth may be set based on a learning result of the control device 31, described later.

When the control device 31 detects contact between the arm 13 or 14 and the object, the control device 31 stops outputting the torque command value to the servomotors of the actuators Ac1 to Ac15, and thus stops the operation of the robot 10. Alternatively, when the control device 31 detects contact between the arm 13 or 14 and the object, the control device 31 may change the torque command value output to the servomotors of the actuators Ac1 to Ac15 into such a torque command value that makes the robot 10 avoid its current state.

The control device 31 outputs, to a display device 40, the result of comparison between the calculated difference |D| and the threshold value Dth set in advance. The display device 40 receives information indicating the result of comparison output from the control device 31, and displays the comparison information. The comparison information may be displayed in the form of a result of calculation by the control device 31 calculating an error percentage (%) of the waveform of the output value V of each of the first to the fourth sensors 20 to 23 relative to the threshold value Dth. When the error percentage of the waveform of the output value V of each of the first to the fourth sensors 20 to 23 relative to the threshold value Dth is equal to or higher than a predetermined level, it is possible to display this result (OK, NG, or a similar form). The control device 31 may also evaluate the acceptability of the operation of the robot 10 based on the comparison information. When the operation of the robot 10 is NG (that is, when precision of the work is low), the control device 31 may control the display device 40 to display instruction information (a warning, for example).

The control device 31 may store the information indicating the result of comparison output to the display device 40. In response to a request made through an input from the input device, the control device 31 may control the display device 40 to display the stored comparison information. The control device 31 may also learn from the results of comparison that are in store. The control device 31 may also reflect the result of learning on a particular job and the threshold value Dth.

The storage device 32 stores jobs as operation modes of the robot 10, and stores the above-described standard waveform associated with (linked to) a particular job (at least one job) among the plurality of jobs. The stored jobs are associated with all the operations of the robot 10. The standard waveform is obtained for each of the first to the fourth sensors 20 to 23 by recording the time history of the output value V output from each of the first to the fourth sensors 20 to 23. The history is recorded while the arm 13 or 14 performs the particular job during a predetermined recording period (operation period of the particular job) with the robot 10 in its normal state, that is, with the arm 13 or 14 out of contact with the object.

As shown in FIG. 3, the server 50 includes a storage device 51. The storage device 51 stores the standard waveform (job linked to the standard waveform). The storage device 51 stores all standard waveforms associated with the particular job of the robot 10 in the robot system 1. When the standard waveform corresponding to the particular job of the robot 10, which is the control target, is not stored in the storage device 32 of the robot controller 30, the control device 31 of the controller 30 acquires a required standard waveform from the storage device 51 of the server 50. The storage device 51 may also store a job unlinked to a standard waveform.

### [Operation of the robot system]

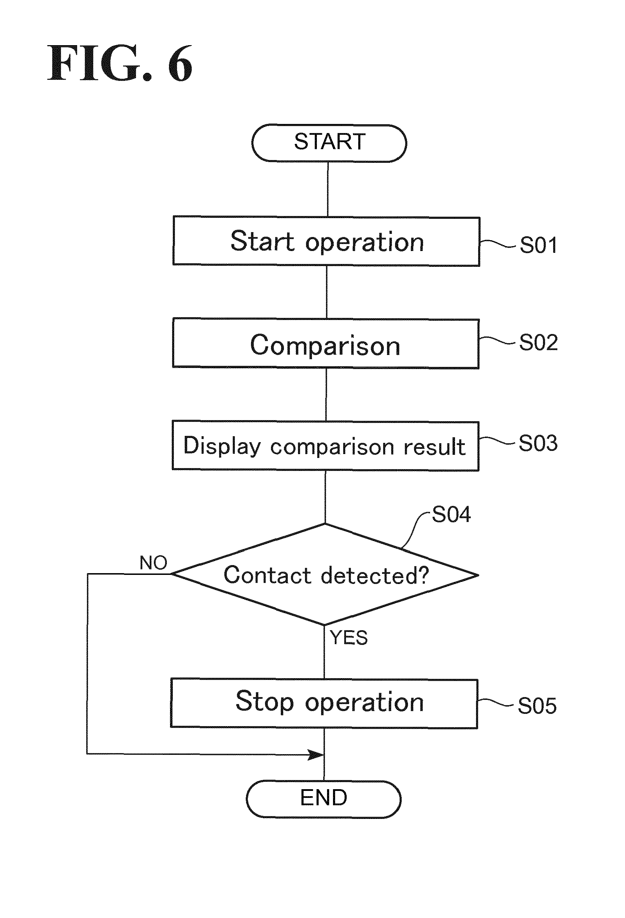

Next, an operation of the robot system 1 will be described. FIG. 6 is a flowchart of an operation of the robot system 1.

As shown in FIG. 6, first, the robot 10 starts an operation (step S01). Next, when the robot 10 performs a particular job, the control device 31 acquires standard data associated with the particular job from the storage device 32. Then, the control device 31 calculates the difference |D| between the standard waveform and the output value V output from each of the first to the fourth sensors 20 to 23, which are mounted on the robot 10, and compares the calculated difference |D| with the threshold value Dth set in advance (step S02).

Next, the control device 31 compares the calculated difference |D| with the threshold value Dth set in advance, and controls the display device 40 to display the result of comparison (step S03).

Also, based on the result of comparison between the calculated difference |D| and the threshold value Dth set in advance, the control device 31 determines whether the arm 13 or 14 of the robot 10 is in contact with an object (step S04). When the control device 31 determines that the arm 13 or 14 is in contact with the object, the control device 31 stops the operation of the robot 10 (step S05). When the control device 31 determines that the arm 13 or 14 is not in contact with the object, the control device 31 ends the processing.

As has been described hereinbefore, in the robot system 1 of this embodiment, the robot controller 30 includes the control device 31 and the storage device 32. The control device 31 controls the robot 10. The storage device 32 stores jobs of the robot 10. The storage device 32 also stores a standard waveform associated with a particular job. When the robot 10 performs the particular job associated with the standard waveform, the control device 31 compares the standard waveform with the result of detection by each of the first to the fourth sensors 20 to 23, and controls the display device 40 to display the result of comparison.

Thus, in the robot system 1, the operation state of the robot 10 can be checked on the display device 40. Thus, the robot system 1 ensures recognition of how accurate the operation of the robot 10 is, and ensures checking of the precision of the work performed by the robot 10. Checking the precision of the work in the robot system 1 facilitates improvement of the operation of the robot 10. This, in turn, improves the precision of the work performed by the robot 10. As a result, the robot system 1 improves the quality of an end product (examples including, but not limited to, a pretreated sample).

When the robot system 1 of this embodiment determines that the arm 13 or 14 of the robot 10 is in contact with an object, the robot 10 stops its operation. Thus, the robot system 1 eliminates or minimizes an erroneous operation of the robot 10, and ensures a safe and highly precise operation.

In the robot system 1 of this embodiment, the server 50 at the storage device 51 stores all standard waveforms associated with a particular job of the robot 10. Thus, the robot system 1 ensures that the storage device 32 of the robot controller 30 does not need to store all of the standard waveforms; a desired standard waveform can be acquired from the server 50 when necessary. Thus, it is not necessary to increase the storage capacity of the storage device 32, and this eliminates or minimizes enlargement of the equipment for the robot controller 30.

In the robot system 1 of this embodiment, the first to the fourth sensors 20 to 23 each include a crystal piezoelectric element having a higher specific frequency than the specific frequency of the structural material of the robot 10. This ensures that the first to the fourth sensors 20 to 23 precisely detect the operation of the robot 10.

The above-described embodiment should not be construed in a limiting sense. For example, in this embodiment, the piezoelectric element of each of the first to the fourth sensors 20 to 23 has been illustrated as a crystal. This, however, should not be construed as limiting the configuration of each of the first to the fourth sensors 20 to 23. Any other configuration is possible insofar as it is a force sensor made of a piezoelectric element having a higher specific frequency than the specific frequency of the structural material of the constituent portions of the robot 10.

The exemplary application of the robot system 1 of this embodiment has been illustrated as a system of processing a liquid biological material. Another possible application of the robot system 1 is a method for producing a workpiece.
- 1: Robot system
- 10: Robot
- 20 to 23: First to fourth sensors
- 30: Robot controller (control apparatus)
- 31: Control unit
- 32: Storage device
- 40: Display device
- 50: Server (external apparatus)
- 51: Storage device

## Claims

1. A robot system 1, **characterized by**:
robot 10 comprising a sensor 20, 21, 22, 23 configured to constantly detect the robot 10; and
at least one control apparatus 30 comprising:
a control device 31 configured to control the robot 10; and
a first storage device 32 configured to store a plurality of operation modes of the robot 10 and standard data associated with at least one operation mode among the plurality of operation modes, wherein when the robot 10 has performed an operation corresponding to the at least one operation mode associated with the standard data, the control device 31 is configured to compare the standard data with a result of detection by the sensor 20, 21, 22, 23, and configured to control a display device 40 to display a result of comparison.

2. The robot system 1 according to claim 1,
wherein the control device 31 is configured to determine whether the robot 10 is in contact with an object based on the result of comparison, and
wherein when the control device 31 determines that the robot 10 is in contact with the object, the control device 31 is configured to stop the operation of the robot 10.

3. The robot system 1 according to claim 1 or 2,
wherein the robot 10 comprises a plurality of robots 10, and the control apparatus 30 comprises a plurality of control apparatuses 30,
wherein the robot system 1 comprises an external apparatus 50 comprising a second storage device 51 configured to store standard data for all the plurality of robots 10, and
wherein the control device 31 is configured to acquire standard data from the second storage device 51 of the external apparatus 50 when the standard data is not stored in the first storage device 32 of the control device 31.

4. The robot system 1 according to any one of claims 1 to 3, wherein the sensor 20, 21, 22, 23 comprises a crystal piezoelectric element comprising a larger specific frequency than a specific frequency of a structural material of the robot 10.

5. A method for producing a workpiece in a robot system 1 comprising a robot 10 and a control apparatus 30 configured to control the robot 10, **characterized by**:
constantly detecting the robot 10 using a sensor 20, 21, 22, 23 disposed in the robot 10;
when the robot 10 performs an operation corresponding to at least one operation mode among a plurality of operation modes of the robot 10, acquiring standard data associated with the at least one operation mode from a storage device 32 of the control apparatus 30 using a control device 31 of the control apparatus 30; and
when the robot 10 has performed the operation corresponding to the at least one operation mode associated with the standard data acquired from the storage device 32, comparing the standard data with a result of detection by the sensor 20, 21, 22, 23 using the control device 31, and controlling a display device 40 to display a result of comparison using the control device 31.
